# EUROPÄISCHE PATENTSCHRIFT

(11) **EP 1 319 634 B1**
(45) Veröffentlichungstag und Bekanntmachung des Hinweises auf die Patenterteilung: **05.11.2008**
(21) Anmeldenummer: 02027479.1
(22) Anmeldetag: 10.12.2002
(51) Int. Cl.: C03B 33/03, B65G 49/06, C03B 33/023

(54) **Verfahren und Vorrichtung zum Teilen von Glasplatten in Zuschnitte**
Process and apparatus for severing glass sheets into parts
Procédé et appareil de découpe des feuilles de verre en plaques individuelles

(30) Priorität: 14.12.2001 DE 10161813
(43) Veröffentlichungstag der Anmeldung: 18.06.2003
(73) Patentinhaber: ALBAT + WIRSAM Software Vertriebsgesellschaft, 35440 Linden (DE)
(72) Erfinder: Wirsam, Bernd, Dr., 35440 Linden (DE)
(74) Vertreter: Buchhold, Jürgen

(56) Entgegenhaltungen:
- WO-A-96/22948
- DE-A- 3 405 900
- DE-A- 4 118 241
- US-A- 3 190 518
- PATENT ABSTRACTS OF JAPAN Bd. 0184, Nr. 95 (C-1250), 16. September 1994 (1994-09-16) & JP 6 166530 A (ASAHI GLASS CO LTD), 14. Juni 1994 (1994-06-14)

## Beschreibung

Die Erfindung betrifft ein Verfahren zum Teilen von Glasplatten in Zuschnitte gemäß dem Oberbegriff von Anspruch 1 sowie eine Vorrichtung gemäß dem Oberbegriff von Anspruch 10.

Beim Zuschneiden von Fixmaßen häufiger Glassorten geht man gewöhnlich von Glasplatten aus, deren Flächenabmessungen etwa 6000 x 3210 mm betragen. Die Rohware wird auf großen A-Böcken angeliefert und paketweise auf A- oder L-Böcken in einem Rohplattenlager abgestellt. Von dort wird jede einzelne Glasplatte entweder mit einem Portalkran oder anderen Entnahmeeinrichtungen aus den Paketen entnommen und an einen Kipptisch übergeben. Dieser befördert die Glasplatte mittels Vakuumsaugern von der Vertikalen in die Horizontale.

Von dem Kipptisch aus gelangt die Glasplatte auf einen Schneidetisch, wo sie positioniert und arretiert wird. Der Schneidetisch besitzt einen auf einer zweidimensional verfahrbaren Brücke angeordneten, meist drehbar gelagerten Schneidekopf, der jede Koordinate anfahren und dabei beliebige Schnitte auf der Glasplatte ausführen kann. Die Schneidepläne werden von einem Computer mittels eines Zuschnittoptimierungsprogramms berechnet und über ein Netzwerk an die Maschinensteuerung übergeben. Letztere ist ebenfalls in der Lage, bei Bedarf Zuschnittoptimierungen durchzuführen.

Jede Rohplatte erhält zunächst einen randnahen Anschnitt in Quer- und Längsrichtung, die sogenannten Nullschnitte. Von diesen Referenzgeraden aus wird anschließend der von dem Zuschnittoptimierungsprogramm vorgegebene Schneideplan mittels X-, Y- und Z-Schnitten auf möglichst kurzem Wege ausgeführt. Zusätzliche W-Schnitte dienen der Erstellung von Sondermaßen. Ist die Glasplatte vollständig angeritzt, wird sie auf einer Folge von Brechtischen vollständig aufgebrochen.

Ein erster Brechtisch dient dem Aufbrechen der X-Schnitte. Hierzu wird die gesamte Glasplatte über Rollen unter Spannung gesetzt, so daß sämtliche X-Schnitte im Durchlauf aufbrechen. Bekannt ist auch die Verwendung einer Brechleiste, die von unten gegen die Glasplatte gedrückt wird, wobei das Glas kurzzeitig angehalten wird. Der Abtransport der so entstandenen Traveren erfolgt mit etwas höherer Geschwindigkeit als die Zuführung, so daß ein Abstand zwischen den einzelnen Platten entsteht. Ein zweiter Brechtisch lenkt den Glasfluß im rechten Winkel um und bricht in gleicher Art und Weise die Y-Schnitte auf. Anschließend erfolgt eine weitere Umlenkung des Glasflusses um 90°, um auf einem weiteren Tisch die Z- bzw. W-Schnitte zu brechen.

Sind alle Trennungen ausgeführt, werden sämtliche Zuschnitte mittels eines Kipptisches wieder in die Vertikale gebracht und einem Zwischenpuffer zugeführt. Dieser besteht aus A-Böcken, L-Böcken, Fächerwagen u.dgl., die entsprechend der Bearbeitungsreihenfolge im Folgeprozeß, beispielsweise einer Isolierglaslinie, bestückt werden.

Um den Platzbedarf dieser im wesentlichen horizontal angelegten Glasschneideanlagen zu verringern und um die Handhabung der sowohl im Rohplattenlager als auch im Zwischenpuffer vertikal stehenden Glasplatten zu vereinfachen, hat man in WO-A1-96 22 948 vorgeschlagen, das gesamte Glasmaterial in vertikaler Position zu transportieren, zu schneiden und zu brechen.

Hierzu wird eine Glastafel dem Rohplattenlager entnommen und unmittelbar in einen Schneidetisch gestellt, der eine im wesentlichen vertikal ausgerichtete Stützfläche aufweist. Ein Kipptisch ist nicht mehr notwendig und kann daher entfallen. Auf dem Schneidetisch wird über ein Zuschnittoptimierungsprogramm der vollständige Schneideplan geritzt. Anschließend werden sämtliche Schnitte auf nachgeordneten, ebenfalls vertikal ausgerichteten Brechstationen aufgebrochen. Der gesamte Glasfluß läuft im wesentlichen linear in einer Ebene. Allerdings muß jede Travere bzw. jeder Zuschnitt um 90° in der Vertikalen gedreht werden, um die in der Nachfolgestation aufzubrechenden Schnittlinien vertikal auszurichten. Nach Durchlaufen der letzten Brechstation werden die fertigen Zuschnitte dem Zwischenpuffer zugeführt.

Ein wesentlicher Nachteil dieser bekannten Glasschneideverfahren besteht darin, daß das gesamte Volumen einer Glassorte entsprechend dem von dem Zuschnittoptimierungsprogramm berechneten Schneideplan kontinuierlich abgearbeitet werden muß, d.h. erst wenn eine Losgröße von durchschnittlich 400 m² Einzelglas ohne Unterbrechung vollständig zugeschnitten worden ist, kann dieses Produktionslos in einem Folgeprozeß weiter bearbeitet werden. Die bereits fertigen Glasscheiben werden im Zwischenpuffer zwischengelagert. Dort müssen sie - wenn sie beispielsweise in einer Isolierglaslinie mit einer oder mehrere Scheiben unterschiedlicher Glasstärke und/oder Vergütung zu kombinieren sind - relativ lange auf die Weiterverarbeitung warten, bis nämlich die letzte Glassorte innerhalb des Loses vollständig aufgeschnitten ist. Dies kann bis zu einen halben Tag dauern und zu Verzögerungen in den Folgeprozessen führen. Der Platzbedarf im Zwischenpuffer ist sehr groß.

Problematisch ist ferner, daß im Falle eines vorzeitigen Materialwechsels oder am Ende eines Optimierungslaufs eine oft große Restplatte auf dem Schneidetisch verbleibt, die über den Kipptisch oder manuell ausgeschleust werden muß, bevor eine andere Glassorte geschnitten werden kann. Die Verwertung einer solchen Restplatte in einem Folgeprozeß ist meist nur umständlich möglich, weil dies die Optimierungsläufe stört. Deren Umstellung oder Anpassung kann zu weiteren Verzögerungen führen. Dementsprechend kann auch ein Glasbruch oder ein Schnellschuß im Folgeprozeß nur außerhalb der üblichen Logistik und damit stark zeitverzögert geschnitten werden. Der Arbeitsaufwand ist entsprechend hoch, ebenso die Herstellkosten.

In US-A-3 190 518 wird jede Glasplatte in einer ersten Schneid- und Brecheinrichtung zunächst mehrfach quer zu ihrer Längsrichtung geritzt und anschließend aufgebrochen wird, so daß eine Folge von Traveren (cross-cut strips) entsteht. Diese Traverenfolge wird anschließend auf eine erste Förderstrecke verbracht, wobei die einzelnen Traveren auf einheitlichen Abstand zueinander gebracht werden. Anschließend werden die Traveren auf senkrecht zu der ersten Förderstrecke angeordnete weitere Förderstrecken verteilt. Dort werden sie durch Ritzen und Brechen weiter aufgeteilt, bis ein gewünschter Zuschnitt erreicht ist.

Von Nachteil hierbei ist, daß jede Rohglasplatte zuerst vollständig in Traveren unterteilt werden muß, bevor eine neue Glasplatte aus dem Rohplattenlager entnommen und der Schneidvorrichtung zugeführt werden kann. Die aus den Traveren erzeugten Zuschnitte müssen folglich in einem Zwischenpuffer zwischengelagert werden und dort - wenn sie beispielsweise mit Scheiben unterschiedlicher Glasstärke und/oder Vergütung zu kombinieren sind - solange warten, bis die nächste Glasplatte aufgelegt und in Traveren aufgeteilt worden ist. Dies führt zu Verzögerungen in den Folgeprozessen. Der Platzbedarf im Zwischenpuffer ist immer noch groß. Hinzu kommt, daß die erste Förderstrecke in ihren Abmessungen so lang ausgebildet sein muß, daß diese sämtliche Traveren einer Glasplatte mit Abstand dazwischen aufnehmen kann, was sich weiter ungünstig auf den Platzbedarf auswirkt.

Bei einer in DE-A1-42 34 536 offenbarten Schneidanlage werden die Glasplatten von Hand oder automatisch in eine vertikal ausgerichtete Scheibenauflage gestellt und mittels einer horizontalen Transportstrecke gegenüber einer kombinierten Schneid-Brech- und Trenneinrichtung positioniert. Nach dem Arretieren der Glasplatte wird ein vertikaler Schnitt ausgeführt und die gewünschte Travere abgebrochen. Diese wird anschließend von einem parallel zur Transportstrecke verfahrbaren Manipulator erfaßt, auf ihre Schnittkante gedreht und in einer nachfolgenden Zwischenablage abgelegt. Soll die Travere weiter unterteilt werden, verfährt man zunächst die verbleibende Restplatte in die Scheibenauflage zurück, um anschließend die Travere mittels der Transportstrecke unter der Schneid-, Brech- und Trenneinrichtung neu zu positionieren. Der abgetrennte Teil wird von dem Manipulator erfaßt und auf der Zwischenablage abgelegt. Dieser Vorgang wird wiederholt, bis der Zuschnitt dem gewünschten Maß entspricht. Im Anschluß an die Zwischenablage ist ein Auslauf vorgesehen, der die zugeschnittenen Scheibenteile einem Folgeprozeß zuführt. Die Zuschnitte können aber auch unmittelbar in den Sammelgestellen eines Zwischenpuffers abgelegt werden.

Ein derartiges Verfahren ist für eine rationelle Serienfertigung kaum geeignet. Das Umsetzen der vorgegebenen Scheibenmaße in erforderliche Schnittlinien erfolgt zwar über eine programmierbare Steuereinrichtung. Die Mehrfachfertigung größerer Scheibenmaße ist jedoch ebenso problematisch wie die Verarbeitung unterschiedlicher Glassorten, weil die auf der Scheibenauflage ständig verbleibenden Reststücke entweder vorrangig verwertet oder einzeln aus der Schneidanlage herausgenommen werden müssen, was den Arbeits- und Zeitaufwand entsprechend erhöht. Folglich muß eine Lagertafel stets vollständig aufgetrennt werden, bevor ein Maß- oder Materialwechsel durchgeführt werden kann. Entsprechend ungeeignet ist das Verfahren für die kontinuierliche Versorgung einer Isolierglasscheiben-Fertigung.

Ziel der Erfindung ist es, unter Überwindung der Nachteile des Standes der Technik, den Platzbedarf für das Sortieren von Glaszuschnitten im Zwischenpuffer ganz erheblich zu verkleinern und die Durchlaufzeiten unterschiedlicher Glassorten deutlich zu reduzieren. Dabei soll der Anfall von Resten weitestgehend vermieden und das Restehandling stark vereinfacht werden. Das gesamte Verfahren soll ferner flexibel auf Störungen reagieren und auch bei kleinen Losgrößen eine stets rationelle Fertigung gewährleisten.

Hauptmerkmale der Erfindung sind im kennzeichnenden Teil der Ansprüche 1 und 10 angegeben. Ausgestaltungen sind Gegenstand der Ansprüche 2 bis 9 und 11 bis 16.

Ausgehend von einem Verfahren zum Teilen von Glasplatten in Zuschnitte, bei dem jede Glasplatte unter Verwendung von Schneid- und Brecheinrichtungen entsprechend dem zu erzeugenden Zuschnitt geritzt und anschließend gebrochen wird,
■ wobei von jeder Glasplatte durch Ritzen und Brechen von X-Schnitten Traveren abgetrennt werden,
■ wobei jede Travere durch Ritzen und Brechen weiter aufgeteilt wird, bis ein gewünschter Zuschnitt erreicht ist, und
■ wobei die fertigen Zuschnitte in einem Zwischenpuffer zwischengespeichert werden,
sieht die Erfindung vor,
■ daß wenigstens zwei Glasplatten mit unterschiedlichen Materialeigenschaften von einem Rohplattenlager einem Zwischenspeicher zugeführt und in dem Zwischenspeicher zwischengelagert werden,
■ daß die Glasplatten aus dem Zwischenspeicher heraus derart dem X-Schnitt zugeführt werden, daß eine Folge von Traveren erzeugt wird, innerhalb der die aufeinanderfolgenden Traveren identische oder unterschiedliche Materialeigenschaften aufweisen,
■ wobei eine durch das Abtrennen einer Travere von der wenigstens einen Glasplatte entstehende Restplatte bis zum Abtrennen einer weiteren Travere in dem Zwischenspeicher verbleibt, und
■ daß die entstehenden Zuschnitte zur Komplettierung von Scheibenpaaren oder -gruppen in einer vorgebbaren Zuordnung in dem Zwischenpuffer abgelegt und bei Bedarf einem Folgeprozeß zugeleitet werden.

Durch diese Verfahrensweise werden permanent Traveren unterschiedlicher Glasarten geliefert (Traverenspender), die zeitnah und bedarfsgerecht einem Folgeprozeß zur Verfügung gestellt werden können. Benötigt man beispielsweise Scheibenpaare mit verschiedenen Materialeigenschaften, kann dies rasch und bequem umgesetzt werden, indem Traveren mit den entsprechenden Materialeigenschaften nacheinander im Wechsel in die Traverenfolge eingereiht werden. Eine Travere mit der ersten Glasart wird zunächst aufgeteilt und in dem Zwischenpuffer zwischengelagert. Währenddessen kann bereits die nachfolgende Travere mit der anderen Glasart geschnitten werden. Sobald die gewünschten Scheiben in dem Zwischenpuffer zusammentreffen, können diese sofort dem Folgeprozeß, beispielsweise einer Isolierglaslinie, zugeführt werden. Das vollständige Aufteilen einer ganzen Lagerplatte ist nicht mehr erforderlich. Der Zwischenpuffer wird vielmehr ständig geleert. Mithin reduziert sich der Platzbedarf für das Sortieren der fertigen Zuschnitte im Zwischenpuffer ganz erheblich, was sich nicht nur günstig auf die Produktionskosten auswirkt. Auch die Verweildauer der einzelnen Zuschnitte im Zwischenpuffer ist deutlich kürzer als bei den bekannten Verfahren, so daß der Folgeprozeß rationeller gestaltet werden kann.

Ein weiterer Vorteil des mittels einer Programmsteuerung voll automatisierbaren Verfahrens besteht darin, daß die Durchlaufzeiten deutlich verkürzt sind. Dadurch kann man auf Störungen während des Optimierungslaufes und/oder innerhalb des Folgeprozesses rasch und flexibel reagieren, indem über die Programmsteuerung an einer geeigneten Stelle innerhalb der Traverenfolge eine beispielsweise für einen Schnellschuß benötigte Scheibe eingereiht wird. Selbst kleinere Losgrößen einer Glassorte lassen sich stets rationell aufteilen und in eine anschließende Fertigung eingliedern. Der übrige Optimierungstauf wird hierdurch kaum gestört, weil die jeweils benötigten Traveren in kürzester Zeit durchgelaufen sind.

Das erfindungsgemäße Verfahren liefert darüber hinaus nicht nur gute Verschnittquoten. Es lassen sich vielmehr Reihenfolgen beim Zuschnitt erzeugen, die mit Hilfe der Dynamik des Zwischenpuffers, eine stets optimale Versorgung der Folgeprozesse gewährleisten. Selbst bei einem Mix von täglich 5 bis 6 Glassorten, ist das erfindungsgemäße Verfahren in der Lage, die Optimierungen der einzelnen Glassorten in ihrem zeitlichen Zusammenwirken zu synchronisieren, wobei der Platzbedarf im Zwischenpuffer stets minimal bleibt.

Bei den üblichen Maßmixen beispielsweise entstehen im Durchschnitt 4 Traveren pro Lagerplatte. Mit der Verwendung des Traverenspenders reduziert sich die Mindestgröße des Zwischenpuffers auf 10 m² Scheibenfläche.

Eine Weiterbildung der Erfindung sieht vor, daß der Zwischenpuffer eine Folge von A-Böcken, L-Böcken oder Fächerwagen ist oder bildet, die in Abhängigkeit von nachfolgenden Fertigungsprozessen individuell mit den ankommenden Scheiben bestückt werden. Ist ein Transportwagen mit passenden Scheibenpaaren befüllt, kann dieser beispielsweise der Isolierglaslinie zugeführt werden, während ein anderer Wagen in der Wagenfolge noch auf seine korrespondierenden (Sonder-)Scheiben wartet. Letztere können auch für einen separaten Folgeprozeß vorgesehen sein. Sobald der Wagen komplettiert worden ist, wird er aus der Wagenfolge ausgeschleust und dem zugehörigen Prozeß zugeführt.

Bei einer Vorrichtung zum Teilen von Glasplatten in Zuschnitte mit einem Rohplattenlager, wenigstens einer Schneid- und Brecheinrichtung und einem Zwischenpuffer zum Zwischenlagern der fertigen Zuschnitte für einen Folgeprozeß, sieht die Erfindung vor,
■ daß den Schneid- und Brecheinrichtungen wenigstens ein Zwischenspeicher vorgeordnet ist, der wenigstens zwei Glasplatten mit unterschiedlichen Materialeigenschaften aufnimmt,
■ daß der Zwischenspeicher zur Aufnahme der Glasplatten wenigstens zwei parallel zueinander angeordnete Aufnahmefächer aufweist, wobei in jedem Aufnahmefach eine Transporteinrichtung für die Glasplatten integriert ist,
■ daß unmittelbar im Anschluß an den Zwischenspeicher ein Schneidetisch vorgesehen ist, der zum Abtrennen einzelner Traveren von den in dem Zwischenspeicher zwischengespeicherten Glasplatten mit einer kombinierten Schneid- und Brecheinrichtung versehen ist,
■ wobei jedes Aufnahmefach mittels einer Programmsteuerung in Bezug auf den Schneidetisch gezielt positionierbar ist, und
■ wobei jede Glasplatte entsprechend der von der Programmsteuerung vorgesehenen Bearbeitungsreihenfolge mittels der Transporteinrichtung derart aus ihrem Aufnahmefach ausfahrbar und der kombinierten Schneid- und Brecheinrichtung zuführbar ist, daß der Zwischenspeicher eine programmierbare Folge von Traveren abgibt, wobei die aufeinanderfolgenden Traveren identische oder unterschiedliche Materialeigenschaften aufweisen.

Der Zwischenspeicher ermöglicht auf überraschend einfache Weise einen schnellen und direkten Zugriff auf Glasplatten unterschiedlicher Glassorten. Von diesen können in schneller Abfolge Traveren abgetrennt und beispielsweise in einer nachgeordneten Schneid- und Brechlinie weiter aufgeteilt werden. Am Ende der Schneid- und Brechlinie lassen sich in dem Zwischenpuffer rasch und gezielt Scheibenpaare oder -gruppen bilden, die sofort einem Folgeprozeß zuführbar sind. Dadurch wird der Platzbedarf im Zwischenpuffer gegenüber herkömmlichen Verfahren drastisch reduziert. Gleichzeitig reduzieren sich die Durchlaufzeiten unterschiedlicher Glassorten ganz erheblich.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen schematischen Aufbau einer Vorrichtung zum Teilen von Glasplatten in Zuschnitte,
- Fig. 2: eine schematische Seitenansicht eines Zwischenspeichers und
- Fig. 3: einen schematischen Aufbau einer anderen Ausführungsform einer Vorrichtung zum Teilen von Glasplatten in Zuschnitte.

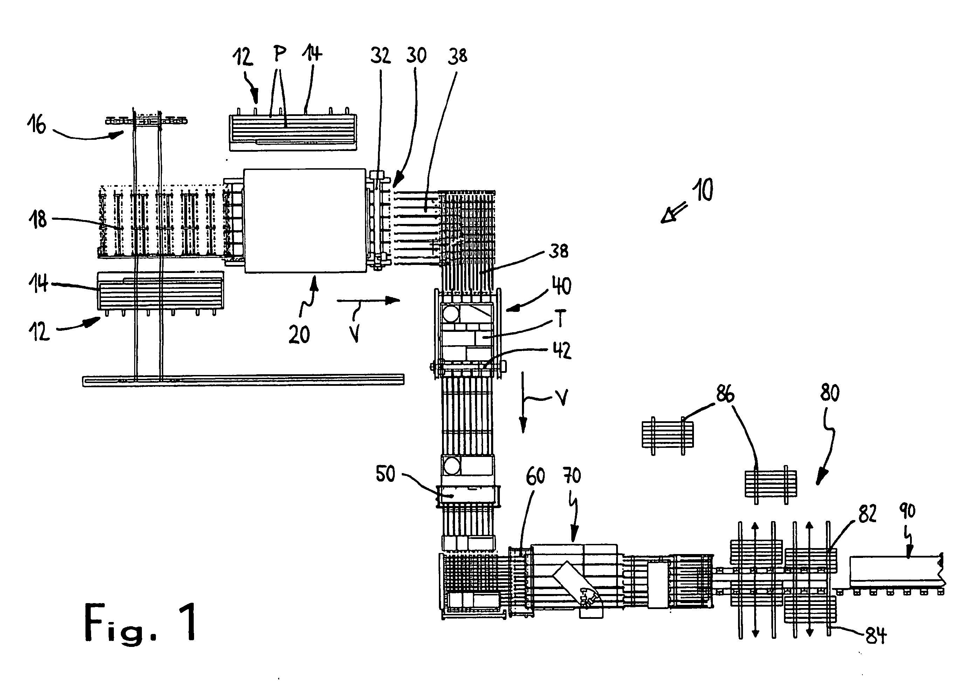

Die in Fig. 1 allgemein mit 10 bezeichnete Vorrichtung zum Teilen von Glasplatten in Zuschnitte besitzt ein Rohplattenlager 12 für Rohglasplatten P, die paketweise nach Materialeigenschaften sortiert auf A- oder L-Böcken 14 abgestellt sind. An Materialeigenschaften unterscheidet man beispielsweise verschiedene Glasstärken, Art und Ausführung einer Beschichtung oder Vergütung, Tönung, Farbe u.dgl. Die Abmessungen der Glasplatten P liegen durchgehend bei etwa 6000 x 3210 mm. Eine Entnahmevorrichtung 16, beispielsweise ein Portalkran, hat Zugriff auf jede einzelne Glasplatte P im Plattenlager 12. Diese werden mittels (nicht gezeigten) Vakuumsaugern aufgenommen und nacheinander auf einem Auflegetisch 18 horizontal abgelegt.

Von dem Auflegetisch 18 aus werden die Platten P einem Zwischenspeicher 20 zugeführt. Dieser ist magazinartig ausgebildet mit mehreren parallel übereinander liegenden Aufnahmefächern 22. Jedes Aufnahmefach 22 ist einer vorgebbaren Glassorte zugeordnet, wobei man beispielsweise bis zu zehn Aufnahmefächer 22 übereinander anordnen kann. In dem vorliegenden Ausführungsbeispiel sind insgesamt sieben Fächer 22 zu einem Magazin 20 zusammengefaßt, das somit bis zu sieben verschiedene Glasplatten P aufnehmen kann. Die Zuordnung einer Glassorte zu einem bestimmten Aufnahmefach 22 erfolgt mittels einer (nicht dargestellten) Programmsteuerung, welche zudem Schneidepläne berechnen bzw. optimieren kann. Sämtliche Daten werden von einem (ebenfalls nicht dargestellten) Computer über ein Netzwerk an die Maschinensteuerung der Vorrichtung 10 übergeben.

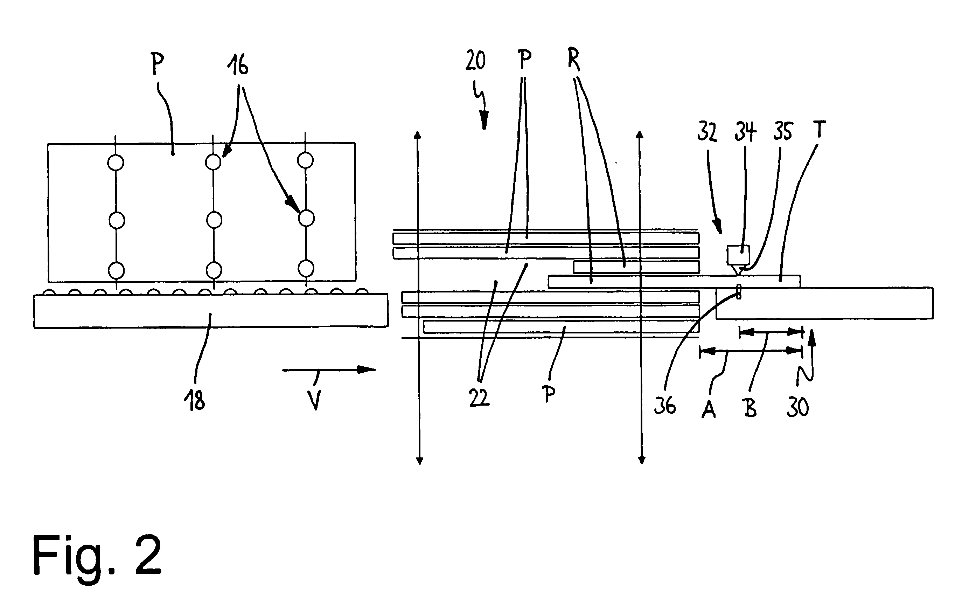

Das gesamte Speichermagazin 20 ist - wie Fig. 2 zeigt - mittels eines (nicht eingezeichneten) Antriebs vertikal verfahrbar, so daß jedes Aufnahmefach 22 von dem Auflegetisch 18 mit der jeweils passenden Glasplatte P beschickt werden kann. Die entsprechende Zuführung der Glasplatten P aus dem Rohplattenlager 12 auf den Auflegetisch 18 wird von der Programmsteuerung koordiniert. Um die Glasplatten P innerhalb der einzelnen Aufnahmefächer 22 handhaben zu können, ist in diesen jeweils eine (gleichfalls nicht gezeigte) Transporteinrichtung integriert.

Unmittelbar im Anschluß an das Magazin 20 ist ein erster Schneidetisch 30 vorgesehen, der zum Abtrennen einzelner Traveren T von den in dem Magazin 20 zwischengespeicherten Glasplatten P mit einer kombinierten Schneid- und Brecheinrichtung 32 versehen ist. Letztere hat eine quer zur Transportrichtung V angeordnete, starre Schneidbrücke 34 mit einem längsbeweglichen Schneidkopf 35 zum Anritzen der Glasplatten P sowie eine unterhalb der Schneidbrücke 34 liegende Brechleiste 36, mit der eine Glasplatte P sofort nach dem Anritzen gebrochen werden kann.

Jede in den Magazinfächern 22 liegende Glasplatte P wird entsprechend der vorgesehenen Bearbeitungsreihenfolge durch Anheben oder Absenken des Magazins 20 senkrecht zu den Glasplatten P bzw. zur Transportrichtung V auf eine Höhe mit dem Schneidetisch 30 gebracht und anschließend von der Transporteinrichtung um eine erforderliche Länge A aus ihrem Aufnahmefach 22 ausgefahren. Die Länge A wird hierbei von der Programmsteuerung berechnet und derart bemessen, daß der Schneidkopf 35 nach dem Arretieren der Glasplatte P exakt die gewünschte Traverenbreite B anritzen kann. Danach wird die Travere T von der Brecheinrichtung 36 sofort abgebrochen und in Transportrichtung V abtransportiert.

Die Steuerung der Vertikalbewegung des Magazins 20 wird ebenfalls von der Programmsteuerung übernommen, ebenso das Herausschieben der Glasplatten P aus dem jeweiligen Aufnahmefach 22. Die nach dem Abtrennen der Travere T entstehende Restplatte R verbleibt zunächst in ihrem Aufnahmefach 22. Sie wird von der Transporteinrichtung soweit erforderlich in das Magazin 20 zurückgezogen, damit dieses für das Abtrennen der nächsten Travere T ungehindert vertikal auf und ab bewegt werden kann. Man kann die Schneid- und Brecheinrichtung 32 aber auch derart in dem Magazin 20 integrieren, daß keine Rückwärtsbewegung der Restplatte R erforderlich ist. Jede Restplatte R kann in der beschriebenen Art und Weise in weitere Traveren T unterteilt werden.

Man erkennt in Fig. 2, daß der Schneidetisch 30 horizontal in derselben Ebene liegt wie der Auflegetisch 18, d.h. eine von dort aus in ein Aufnahmefach 22 eingeschobene Glasplatte P gelangt ohne jegliche Bewegung des Magazins 20 unmittelbar auf den Schneidetisch 30. Werden daher in einer Serie beispielsweise nur zwei verschiedene Glassorten verarbeitet und in benachbarten Aufnahmefächern 22 abgelegt, muß das Magazin 20 nur minimal bewegt werden, nämlich lediglich um die Höhe dieser beiden Aufnahmefächern 22. Wurden die übrigen Aufnahmefächer 22 zuvor mit weiteren Glassorten belegt, können diese im Laufe der Zeit entweder bei Bedarf zwischendurch oder gegen Ende der Bearbeitungszeit in Traveren T unterteilt werden. Optimierung und Koordinierung dieser Bewegungsabläufe werden wiederum von der Programmsteuerung übernommen.

Jede vollständig abgetrennte Travere T wird an ein Transportband 38 abgegeben, von diesem ohne Lageveränderung um 90° umgelenkt und an einen zweiten Schneidetisch 40 übergeben. Dort wird sie entlang der von der Schneid- und Brecheinrichtung 32 am ersten Schneidetisch 30 erzeugten (nicht sichtbaren) Schnittkante ausgerichtet und arretiert.

Der zweite Schneidetisch 40 besitzt einen auf einer zweidimensional verfahrbaren Brücke 42 angeordneten, drehbar gelagerten (nicht dargestellten) Schneidekopf, der die Travere T entsprechend einem von der Programmsteuerung zugeordneten und für die jeweilige Glasart optimierten Schneideplan vollständig anritzt. Als Bezugslinie dient die am ersten Schneidetisch 30 erzeugte Schnittkante. Von dieser aus werden die erforderlichen Y- und Z-Schnitte auf möglichst kurzem Wege ausgeführt. Zusätzliche W-Schnitte können zur Erstellung von Sondermaßen dienen. Ist die Travere T vollständig angeritzt, wird sie auf einer Folge von Brechtischen 50, 60 vollständig aufgebrochen.

Der erste Brechtisch 50 dient dem Aufbrechen der Y-Schnitte. Anschließend erfolgt eine weitere Umlenkung des Glasflusses V um 90°, um auf dem zweiten Brechtisch 60 die verbliebenen Z- bzw. W-Schnitte aufzubrechen. Das Aufbrechen der einzelnen Schnitte kann im Durchlauf über Rollen erfolgen oder mittels Brechleisten. Der Abtransport der jeweils entstehenden Zuschnitte erfolgt mit etwas höherer Geschwindigkeit als die Zuführung, so daß ein Abstand zwischen den einzelnen Glasscheiben entsteht.

Sind alle Schnitte aufgebrochen, werden sämtliche Zuschnitte mittels einer Dreh- und Kippvorrichtung 70 wieder in die Vertikale gebracht und einem Zwischenpuffer 80 zugeführt. Dieser besteht bevorzugt aus gegeneinander verschiebbaren Fächerwagen 82, 84, die entsprechend der Bearbeitungsreihenfolge im Folgeprozeß, beispielsweise einer Isolierglaslinie 90, bestückt und gleichzeitig entleert werden können. Die Positionierung der Scheiben bzw. Zuschnitte innerhalb des Zwischenpuffers 80 erfolgt über die Programmsteuerung, so daß die Verfahrwege der Fächerwagen 82, 84 minimiert werden.

Man erkennt, daß das Magazin 20 zusammen mit dem ersten Schneidetisch 30 einen Traverenspender bildet, der permanent eine Folge von Traveren T liefert. Innerhalb dieser Folge können die Traveren T identische oder unterschiedliche Materialeigenschaften aufweisen, d.h. verschiedene Glassorten wechseln sich in beliebiger Reihenfolge ab. In der Folgebearbeitung wird jede Travere T auf dem Schneidetisch 40 entsprechend einem ihr zugeordneten Schneideplan individuell angeritzt und auf den nachfolgenden Brechtischen 50, 60 aufgebrochen. Die fertigen Zuschnitte werden in den Zwischenpuffer 80 eingestellt und zwar solange bis eine Komplettierung von Scheibenpaaren oder -gruppen für den anstehenden Folgeprozeß 90 erreicht ist. Die betreffenden Scheiben werden - unabhängig von den weiter laufenden Optimierungsläufen - gleich nach dem Zusammentreffen einzeln oder in Gruppen dem Folgeprozeß zugeführt, so daß der Zwischenpuffer 80 nur eine geringe Menge an Glasscheiben aufnehmen muß.

Für einen Isolierglashersteller bedeutet dies beispielsweise, daß eine 4 mm Floatglasscheibe nur kurze Zeit in dem Zwischenpuffer 80 auf ihr beschichtetes Gegenstück zu warten braucht. Kommt die Gegenscheibe und ist damit z.B. auch die Versandreihenfolge gewährleistet, können beide Scheiben sofort in die Isolierglaslinie 90 eingeschleust werden.

Die Optimierung des gesamten Verfahrensablaufs - von der Beschickung und Organisation des Zwischenspeichers 20 bis hin zur Berechnung der erforderlichen Schneidepläne für die einzelnen Traveren T - erfolgt über die Programmsteuerung. Diese berechnet und koordiniert ausgehend von den Erfordernissen in dem jeweiligen Folgeprozeß die von dem Traverenspender 20, 30 zu liefernde Traverenfolge, wobei die Verfahrwege der Entnahmevorrichtung 16 im Rohplattenlager 12, des Zwischenspeichers 20 sowie der Fächerwagen 82, 84 im Zwischenpuffer 80 weitestgehend minimiert werden.

Für Sonderserien oder bei der Herstellung von Fenstern z.B. mit Ornamentglas-Einsätzen, können externe Zuschnitte, Glasscheiben oder Ornamentscheiben über A-Böcke oder weitere Fächerwagen 86 jederzeit in den Zwischenpuffer 80 eingeschleust und dem Folgeprozeß zugeführt werden. Umgekehrt lassen sich jederzeit Zuschnitte, die in einem Folgeprozeß nicht benötigt werden oder einer Handfertigung zugeführt werden sollen, aus dem Zwischenpuffer 80 ausschleusen.

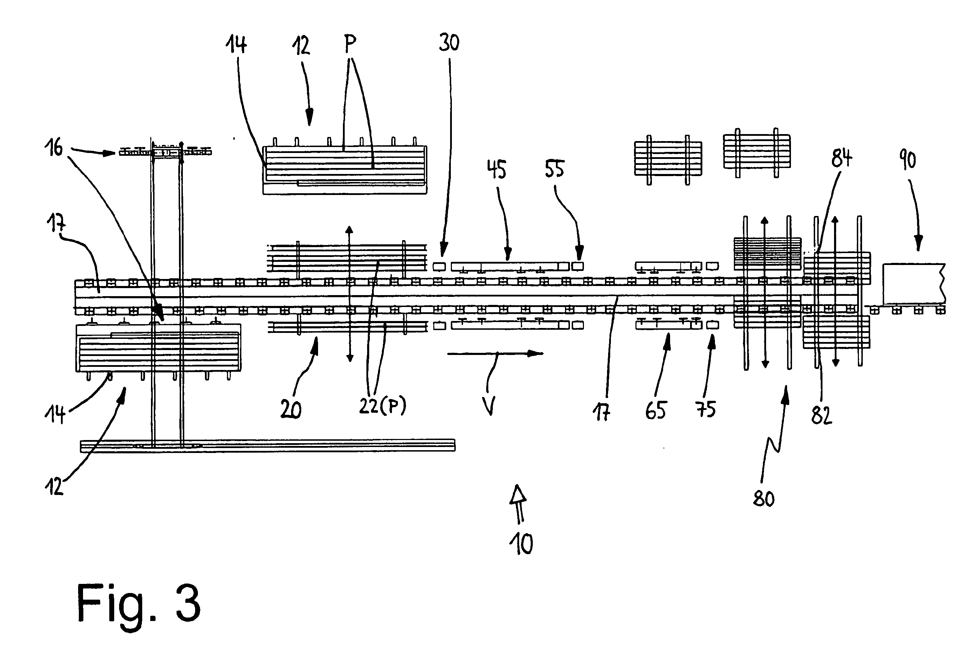

Bei einer in Fig. 3 dargestellten Ausführungsform der erfindungsgemäßen Vorrichtung 10 werden sowohl die Glasplatten P als auch die daraus gewonnenen Traveren und Zuschnitte während des gesamten Verfahrens vertikal gehandhabt. Dies hat den Vorteil, daß die ohnehin senkrecht im Rohplattenlager 12 eingelagerten Glasplatten P nicht mehr in die Horizontale gekippt werden müssen. Der im Vertikalverfahren vor dem Zwischenspeicher 20 angeordnete Auflegetisch 18 kann daher vollständig entfallen. Gleiches gilt für die vor dem Zwischenpuffer 80 vorgesehene Dreh- und Kippvorrichtung 70, welche die aus dem Brechtisch 60 horizontal auslaufenden Zuschnitte aufstellt, um sie in die Fächerwagen 82, 84 einstellen zu können.

Die Entnahmevorrichtung 16 entnimmt die Glasplatten P dem Rohplattenlager 12 und stellt sie mit ihrer Längskante unmittelbar auf eine Transporteinrichtung 17, beispielsweise ein horizontales Transportband 17. Dieses befördert jede einzelne Glasplatte P unmittelbar in den Zwischenspeicher 20.

Der Zwischenspeicher 20 hat mehrere parallel nebeneinander liegende Aufnahmefächer 22, denen verschiedene Glassorten zugeordnet sind. Die Zuordnung einer Glassorte zu einem bestimmten Aufnahmefach 22 erfolgt über die Programmsteuerung, die zudem die Bewegung des motorisch angetriebenen Zwischenspeichers 20 senkrecht zu den Glasplatten P koordiniert. Hierdurch ist sichergestellt, daß die Glasplatten P stets korrekt einsortiert und die gewünschten Traveren T bzw. die entsprechend dem Folgeprozeß erforderlichen Traverenfolgen ausgegeben werden.

Für die Handhabung der Glasplatten P innerhalb der einzelnen Aufnahmefächer 22 ist eine (nicht gezeigte) Transporteinrichtung integriert. Man kann Magazin 20 aber auch so ausbilden, daß die Glasplatten P stets von dem Transportband 17 bewegt werden. Der unmittelbar im Anschluß an das Magazin 20 zur Ausführung der X-Schnitte angeordnete Schneidetisch 30 ist ebenfalls vertikal ausgerichtet, d.h. eine von dem Zwischenspeicher 20 um eine jeweils erforderliche Strecke A ausgegebene Glasplatte P wird von der Schneid- und Brecheinrichtung 32 vertikal geritzt und anschließend sofort gebrochen.

Die dabei entstehenden Traveren T werden über das Transportband 17 oder eine andere Transporteinrichtung einer Dreh- bzw. Schwenkvorrichtung 45 zugeführt. Diese dreht jede Travere T in der Vertikalen um 90° und legt sie auf ihrer von der Schneidund Brecheinrichtung 32 am ersten Schneidetisch 30 zuvor erzeugten (nicht sichtbaren) Schnittkante ab.

Von der Drehvorrichtung 45 aus gelangen die Traveren T zu einer zweiten Schneideinrichtung 55, welche die von der Programmsteuerung bzw. dem Zuschneideplan vorgesehenen Y-Schnitte ausführt. Diese zweite Schneideinrichtung 55 ist - ebenso wie der erste Schneidetisch 30 - mit kombinierten (nicht dargestellten) Schneid- und Brechwerkzeugen ausgestattet, d.h. die Y-Schnitte werden nach dem Ritzen sofort aufgebrochen.

Nach dem Aufbrechen der Y-Schnitte werden die dabei entstandenen Zuschnitte von einer weiteren Dreh- bzw. Schwenkvorrichtung 65 vertikal um 90° gedreht, um in einer dritten Schneideinrichtung 75 die gegebenenfalls noch erforderlichen Z- und W-Schnitte auszuführen. Letztere verfügt ebenfalls über (nicht gezeigte) Schneid- und Brechwerkzeuge, die nach dem Ausrichten des betreffenden Zuschnitts anhand der zuvor ausgeführten Brechkante die noch fehlenden Schnitte in der Vertikalen ausführen.

Sind alle Schnitte aufgebrochen, werden sämtliche Zuschnitte von der Transporteinrichtung 17 unmittelbar in den Zwischenpuffer 80 verbracht. Dessen seitlich verfahrbare Fächerwagen 82, 84 nehmen die fertigen Glasscheiben in einer von der Programmsteuerung vorgebbaren Ordnungsfolge auf.

Die Erfindung ist nicht auf eine der vorbeschriebenen Ausführungsformen beschränkt, sondern in vielfältiger Weise abwandelbar. So kann vor oder zwischen dem Auflegetisch 18 und dem Zwischenspeicher 20 im vertikalen Verfahren ein (nicht dargestellter) Hebetisch angeordnet sein, der unabhängig von der Position des Zwischenspeichers 20 relativ zu dem Schneidetisch 40 Glasplatten P von dem Auflegetisch 18 in bereits geleerte Aufnahmefächer 22 befördert. Auch können der Auflegetisch 18 und der Schneidetisch 30 vertikal versetzt zueinander liegen. Man kann ebenso den Schneidetisch 30 relativ zu dem Zwischenspeicher 20 verfahren, so daß letzterer aufgrund seiner gegebenenfalls großen Masse nicht bewegt werden muß.

In einer weiteren Ausführungsform können nach dem Zwischenspeicher 20 mehrere Schneid-/Brechlinien 40, 50, 60, 70 bzw. 45, 55, 65, 75 vorgesehen sein, d.h. der Traverenspender 20, 30 liefert permanent Traveren T, die abwechselnd oder intermittierend den einzelnen Verarbeitungslinien 40, 50, 60, 70 bzw. 45, 55, 65, 75 zugeführt werden. Diese können jeweils in einem gemeinsamen oder in separaten Zwischenpuffern 80 enden.

Um das erfindungsgemäße Verfahren mit geringem Aufwand auf bereits bestehenden Glasschneideanlagen umsetzen zu können, kann man die beispielsweise gemäß Fig. 3 vertikal auf dem Schneidetisch 30 des Zwischenspeichers 20 abgetrennten Traveren T auf einem anschließenden (nicht gezeigten) Kipptisch in die Horizontale bringen. Von dort aus können die Traveren T auf der bisherigen Anlage in gewohnter Weise horizontal weiterverarbeitet werden, ohne daß hierzu bauliche Veränderungen vorzunehmen wären. In gleicher Weise läßt sich ein horizontaler Traverenspender 20, 40 gemäß Fig. 2 in einer vertikal arbeitenden Glasschneideanlage einsetzen, indem die auf dem Schneidetisch 30 entstehenden Traveren T vor der Weiterbearbeitung in die Vertikale gebracht werden.

Die an den Schneidetischen 40 bzw. 30, 55, 75 jeweils vorgesehene Schneid- und Brecheinrichtung kann für die Verarbeitung von beschichtetem Glas mit einer Schleifeinrichtung und für die Verarbeitung von Verbundglasscheiben mit einer zusätzlichen Trenneinrichtung ergänzt werden. Weitere Trenneinrichtungen, beispielsweise Sägen, Laser oder Waterjets sind ebenfalls einzeln oder in Kombination einsetzbar.

Zusammenfassend stellt man fest, daß Rohlagerplatten P mit verschiedenen Materialeigenschaften in einem Zwischenspeicher 20 abgelegt bzw. zwischengelagert werden. Dieser ermöglicht durch eine Relativbewegung in der Senkrechten und/oder in der Horizontalen den schnellen Zugriff auf die einzelnen Lagerplatten P oder auf gegebenenfalls entstehende Rest-Lagerplatten R. Aus diesem Magazinpuffer heraus wird eine einfache vertikale oder horizontale Glasschneidemaschine 30 beschickt, die stets nur einen X-Schnitt ausführt und die hierdurch definierten Traveren T sofort abbricht. Diese werden anschließend in an sich bekannter Weise durch weitere Y-, Z-und/oder W-Schnitte zerteilt.

Mithin wird der Prozeß des Glasschneidens und Glasbrechens in mindestens zwei Elementarschritte zerlegt, indem das Schneiden und Brechen der X-Schnitte von dem Schneiden und Brechen der Y-Schnitte zeitlich und räumlich getrennt wird. Beim vertikalen Zuschneiden können die Traveren T raumsparend gedreht werden, während sie beim horizontalen Verfahren mit einem Einkopfschneider 42 traditionell geritzt und in anschließenden Arbeitsgängen aufgebrochen werden. In beiden Verfahren erfolgt also zunächst nur der erste X-Schnitt. Die Restplatte R verbleibt in dem Zwischenspeicher 20 stehen oder liegen, so daß ein Restehandling zumindest für die gängigen Glasarten nicht mehr notwendig ist.

Für die weniger gängigen Glasarten ist der Rücktransport der Restplatte R in das Rohplattenlager an dieser Stelle wegen der geringen Entfernung und der dort sowieso vorhandenen Transportmöglichkeiten kein Problem. Die Restplatte kann aber auch bis zum Beginn der nächsten Zuschnittoptimierung für die betroffene Glasart in dem Zwischenspeicher 20 verbleiben und wieder mit eingeplant werden. Sämtliche Reste R werden ebenso wie die abgetrennten Traveren T permanent von der Programmsteuerung erfaßt.

Die fertigen Scheiben werden in dem dynamischen Zwischenpuffer 80 eingereiht. Dieser kleine Puffer dient nur noch dazu, Scheiben, die unkompatibel zu der im Folgeprozeß verlangten Produktions- oder Verpackungsreihenfolge sind (out of sequence), kurzfristig zwischenzuparken. Außerdem können Scheiben, die nicht unmittelbar in den automatisierten Folgeprozeß einmünden, hier ausgeschleust werden. Desweiteren können Sonderscheiben, z.B. ESG-, VSG- oder Ornamentglasscheiben, über den Zwischenpuffer 80 in den Folgeprozeß eingeschleust werden.

Die Ausführung des Zwischenpuffers 80 erfolgt bevorzugt durch zwei gegeneinander verschiebbare Fächerwagen 82, 84, die dynamisch mit Scheiben gefüllt und gleichzeitig dynamisch wieder entleert werden. Beim Einschleusen wie auch beim Ausschleusen können ganze Wagen 82, 84 ausgetauscht werden. Die Positionierung der Scheiben innerhalb des Zwischenpuffers 80 erfolgt stets so, daß die Verfahrwege minimiert werden.

Alternativ besteht der dynamische Zwischenpuffer 80 aus einem immobilen Magazin, das von der einen Seite mit einem verfahrbaren Beschickungssystem gefüllt und auf der anderen Seite mit einer entsprechenden Einrichtung dynamisch entleert werden kann.

Für den manuellen Zuschnitt von Sondergläsern kann die Optimierung ebenfalls synchronisierte Handzuschnittlisten liefern, ohne die übrigen Optimierungsläufe zu stören oder übermäßig aufzuhalten.

Um daher bei einem Verfahren zum Teilen von Glasplatten P in Zuschnitte den Platzbedarf in einem Zwischenpuffer 80 ganz erheblich zu verringern und um die Durchlaufzeiten unterschiedlicher Glassorten deutlich zu reduzieren, wird aus den in einem Rohplattenlager 12 gelagerten Glasplatten P eine Folge von Traveren T erzeugt, innerhalb der die aufeinanderfolgenden Traveren T identische oder unterschiedliche Materialeigenschaften aufweisen. Jede Travere T wird durch Ritzen und Brechen weiter aufgeteilt, bis ein gewünschter Zuschnitt erreicht ist. Die entstehenden Zuschnitte werden in einer vorgebbaren Zuordnung in dem Zwischenpuffer 80 abgelegt und bei Bedarf einem Folgeprozeß zugeleitet.

Eine Vorrichtung zum Teilen von Glasplatten in Zuschnitte sieht dementsprechend vor, daß verschiedenen Schneid- und Brecheinrichtungen wenigstens ein Zwischenspeicher vorgeordnet ist, der wenigstens zwei Glasplatten mit unterschiedlichen Materialeigenschaften aufnimmt und eine programmierbare Folge von Traveren abgibt, wobei die aufeinanderfolgenden Traveren identische oder unterschiedliche Materialeigenschaften aufweisen.

### Bezugszeichenliste

- A: Länge
- B: Traverenbreite
- P: Glasplatte
- R: Restplatte
- T: Traveren
- V: Transportrichtung

- 10: Glasschneidevorrichtung
- 12: Rohplattenlager
- 14: A- oder L-Bock
- 16: Entnahmevorrichtung
- 17: Transporteinrichtung
- 18: Auflegetisch

- 20: Zwischenspeicher / Magazin
- 22: Aufnahmefach

- 30: erster Schneidetisch
- 32: Schneid- und Brecheinrichtung
- 34: Schneidbrücke

- 35: Schneidkopf
- 36: Brechleiste
- 38: Transportband

- 40: zweiter Schneidetisch
- 42: Brücke
- 45: Dreh-/Schwenkvorrichtung

- 50: Brechtisch
- 55: Schneideinrichtung
- 60: Brechtisch
- 65: Dreh-/Schwenkvorrichtung
- 70: Dreh- und Kippvorrichtung
- 75: Schneideinrichtung

- 80: Zwischenpuffer
- 82: Fächerwagen
- 84: Fächerwagen
- 86: Fächerwagen
- 90: Isolierglaslinie

## Patentansprüche

1. Verfahren zum Teilen von Glasplatten (P) in Zuschnitte, bei welchem jede Glasplatte (P) unter Verwendung von Schneid- und Brecheinrichtungen (30, 40, 50. 55, 60, 65, 75) entsprechend dem zu erzeugenden Zuschnitt geritzt und anschließend gebrochen wird,
a) wobei von jeder Glasplatte (P) durch Ritzen und Brechen von X-Schnitten Traveren (T) abgetrennt werden,
b) wobei jede Travere (T) durch Ritzen und Brechen weiter aufgeteilt wird, bis ein gewünschter Zuschnitt erreicht ist, und
c) wobei die fertigen Zuschnitte in einem Zwischenpuffer (80) zwischengespeichert werden,
**dadurch gekennzeichnet,**
d) **daß** wenigstens zwei Glasplatten (P) mit unterschiedlichen Materialeigenschaften von einem Rohplattenlager (12) einem Zwischenspeicher (20) zugeführt und in dem Zwischenspeicher (20) zwischengelagert werden,
e) **daß** die Glasplatten (P) aus dem Zwischenspeicher (20) heraus derart dem X-Schnitt zugeführt werden, daß eine Folge von Traveren (T) erzeugt wird, innerhalb der die aufeinander folgenden Traveren (T) identische oder unterschiedliche Materialeigenschaften aufweisen,
f) wobei eine durch das Abtrennen einer Travere (T) von der wenigstens einen Glasplatte (P) entstehende Restplatte (R) bis zum Abtrennen einer weiteren Travere (T) in dem Zwischenspeicher (20) verbleibt, und
g) **daß** die entstehenden Zuschnitte zur Komplettierung von Scheibenpaaren oder -gruppen in einer vorgebbaren Zuordnung in dem Zwischenpuffer (80) abgelegt und bei Bedarf einem Folgeprozeß zugeleitet werden.

2. Verfahren nach Anspruch 1, **dadurch gekennzeichnet, daß** die Abfolge der Materialeigenschaften der Traveren (T) entsprechend der Zuordnung in dem Zwischenpuffer (80) und/oder den Anforderungen in einem Folgeprozeß, beispielsweise einer Isolierglaslinie (90), programmierbar ist.

3. Verfahren nach Anspruch 1 oder 2, **dadurch gekennzeichnet, daß** fertige Zuschnitte dem Zwischenpuffer (80) entnommen und einem Folgeprozeß zugeführt werden.

4. Verfahren nach Anspruch 3, **dadurch gekennzeichnet, daß** die Zuschnitte paar- oder gruppenweise entnommen werden.

5. Verfahren nach einem der Ansprüche 1 bis 4, **dadurch gekennzeichnet, daß** der Zwischenspeicher (20) in Abhängigkeit von der Traverenfolge kontinuierlich mit Glasplatten (P) aus dem Rohplattenlager (12) befüllt wird.

6. Verfahren nach einem der Ansprüche 1 bis 5, **dadurch gekennzeichnet, daß** an den Traveren (T) weitere Schnitte, beispielsweise Y-, Z- und/oder W-Schnitte, ausgeführt werden, wobei der X-Schnitt beim Ausführen der weiteren Schnitte als Referenzlinie dient.

7. Verfahren nach einem der Ansprüche 1 bis 6, **dadurch gekennzeichnet, daß** die Ausführung der X-Schnitte (Traverenschnitte) und die Ausführung der weiteren Schnitte räumlich und zeitlich getrennt erfolgen.

8. Verfahren nach einem der Ansprüche 1 bis 7, **dadurch gekennzeichnet, daß** der Zwischenpuffer (80) eine Folge von A-Böcken, L-Böcken oder Fächerwagen ist.

9. Verfahren nach einem der Ansprüche 1 bis 8, **dadurch gekennzeichnet, daß** externe Zuschnitte, Glasscheiben, Ornamentscheiben u.dgl. in den Zwischenpuffer (80) eingeschleust werden.

10. Vorrichtung (10) zum Teilen von Glasplatten (P) in Zuschnitte, mit einem Rohplattenlager (12), wenigstens einer Schneid- und Brecheinrichtung (30, 40, 50, 55, 60, 75) und einem Zwischenpuffer (80) zum Zwischenlagern der fertigen Zuschnitte für einen Folgeprozeß, **dadurch gekennzeichnet,**
a) **daß** den Schneid- und Brecheinrichtungen (30, 40, 50, 55, 60, 75) wenigstens ein Zwischenspeicher (20) vorgeordnet ist, der wenigstens zwei Glasplatten (P) aus dem Rohplattenlager mit unterschiedlichen Materialeigenschaften aufnimmt,
b) **daß** der Zwischenspeicher (20) zur Aufnahme der Glasplatten (P) wenigstens zwei parallel zueinander angeordnete Aufnahmefächer (22) aufweist, wobei in jedem Aufnahmefach (22) eine Transporteinrichtung für die Glasplatten (P) integriert ist,
c) **daß** unmittelbar im Anschluß an den Zwischenspeicher (20) ein Schneidetisch (30) vorgesehen ist, der zum Abtrennen einzelner Traveren (T) von den in dem Zwischenspeicher (20) zwischengespeicherten Glasplatten (P) mit einer kombinierten Schneid- und Brecheinrichtung (32) versehen ist,
d) wobei jedes Aufnahmefach (22) mittels einer Programmsteuerung in Bezug auf den Schneidetisch (30) gezielt positionierbar ist, und
e) wobei jede Glasplatte (P) entsprechend der von der Programmsteuerung vorgesehenen Bearbeitungsreihenfolge mittels der Transporteinrichtung derart aus ihrem Aufnahmefach (22) ausfahrbar und der kombinierten Schneid- und Brecheinrichtung (32) zuführbar ist, daß der Zwischenspeicher (20) eine programmierbare Folge von Traveren (T) abgibt, wobei die aufeinanderfolgenden Traveren (T) identische oder unterschiedliche Materialeigenschaften aufweisen.

11. Vorrichtung nach Anspruch 10, **dadurch gekennzeichnet, daß** jedes Aufnahmefach (22) geeignet ist, eine einzelne Glasplatte (P) aufzunehmen.

12. Vorrichtung nach Anspruch 10 oder 11, **dadurch gekennzeichnet, daß** der Zwischenspeicher (20), wenigstens eine vorgeordnete Transporteinrichtung (17, 18) und/oder der nachfolgend angeordnete Schneidetisch (30) relativ zueinander verfahrbar sind.

13. Vorrichtung nach Anspruch 12, **dadurch gekennzeichnet, daß** jedes Aufnahmefach (22) in Bezug auf die Transporteinrichtung (17, 18) gezielt positionierbar ist.

14. Vorrichtung nach einem der Ansprüche 10 bis 13, **dadurch gekennzeichnet, daß** der Schneidetisch (30) in dem Zwischenspeicher (20) integriert ist.

15. Vorrichtung nach Anspruch 14, **dadurch gekennzeichnet, daß** der Zwischenspeicher (20) mit dem Schneidetisch (30) relativ zu einer nachgeordneten Transportstrecke verfahrbar ist.

16. Vorrichtung nach einem der Ansprüche 10 bis 15, **dadurch gekennzeichnet, daß** der Zwischenspeicher (20) motorisch angetrieben ist.

## Claims

1. Method for dividing glass plates (P) into cut parts, wherein each glass plate (P) is scored and then broken off according to the cut part intended to be produced using cutting and breaking devices (30, 40, 50, 55, 60, 65, 75) ,
a) wherein cross-cut strips (T) are cut off from each glass plate (P) by scoring and breaking x-cuts;
b) wherein each cross-cut strip (T) is further divided by scoring and breaking until a desired cut part is produced; and
c) wherein the finished cut parts are temporarily stored in an intermediate buffer (80);
**characterized in that**
d) at least two glass plates (P) having different material properties are transported from a raw plate storage unit (12) to an intermediate storage unit (20) for being temporarily stored in said intermediate storage unit (20);
e) the glass plates (P) are removed from the intermediate storage unit (20) and fed to the x-cut in such a manner that a sequence of cross-cut strips (T) is produced in which the successive cross-cut strips (T) present identical or different material properties;
f) wherein a residual plate (R) produced by separating a cross-cut strip (T) from the at least one glass plate (P) remains in the intermediate storage unit (20) until the next cross-cut strip is cut off; and
g) that the resulting cut parts are deposited in the intermediate buffer (80) for completing pane pairs or pane groups according to a predetermined allocation and transported to a subsequent process, if necessary.

2. Method according to claim 1, **characterized in that** the sequence of material properties of the cross-cut strips (T) is programmable according to the allocation in the intermediate buffer (80) and/or the requirements in a subsequent process, for example in an insulating glass line (90).

3. Method according to claim 1 or 2, **characterized in that** finished cut parts are removed from the intermediate buffer (80) and fed into a subsequent process.

4. Method according to claim 3, **characterized in that** the cut parts are removed in pairs or in groups.

5. Method according to any one of claims 1 to 4, **characterized in that** the intermediate buffer (20) is continuously filled with glass plates (P) from the raw plate storage unit (12) depending on the sequence of cross-cut strips.

6. Method according to any one of claims 1 to 5, **characterized in that** further cuts, for example Y, Z, and/or W cuts, are performed on the cross-cut strips (T) using the X cut as a reference line for performing the further cuts.

7. Method according to any one of claims 1 to 6, **characterized in that** the X cuts (traverse cuts) and the further cuts are performed separately in terms of space and time.

8. Method according to any one of claims 1 to 7, **characterized in that** the intermediate buffer (20) is a sequence of A frames, L frames or harp racks.

9. Method according to any one of claims 1 to 8, **characterized in that** external cut parts, glass panes, patterned panes, and the like are fed into the intermediate buffer (80).

10. Apparatus (10) for dividing glass plates (P) in cut parts, comprising a raw plate storage unit (12), at least one cutting and breaking unit (30, 40, 50, 55, 60, 75), and an intermediate buffer (80) for temporarily storing the finished cut parts for a subsequent process, **characterized in that**
a) at least one intermediate storage unit (20) is provided upstream of the cutting an breaking devices (30, 40, 50, 55, 60, 75) to receive at least two glass plates (P) having different material properties from the raw plate storage unit;
b) the intermediate storage unit (20) comprises at least two receiving compartments (22) arranged parallel to each other for receiving the glass plates (P), a transport device for the glass plates (P) being integrated into each receiving compartment (22);
c) that a cutting table (30) is provided directly downstream of the intermediate storage unit (20), said cutting table (30) being equipped with a combined cutting and breaking unit (32) for cutting off individual cross-cut strips (T) from the glass plates (P) temporarily stored in the intermediate storage unit (20);
d) wherein each receiving compartment (22) may be positioned in targeted manner relative to the cutting table (30) by means of a program control; and
e) wherein each glass plate (P) may be removed from its receiving compartment (22) by means of the transport device and routed to the combined cutting and breaking unit (32) according to the processing order determined by the program control and in such a manner that the intermediate storage unit (20) dispenses a programmable sequence of cross-cut strips (T) in which the successive cross-cut strips (T) present identical or different material properties.

11. Apparatus according to claim 10, **characterized in that** each receiving compartment (22) is adapted to receive an individual glass plate (P).

12. Apparatus according to claim 10 or 11, **characterized in that** the intermediate storage unit (20), at least one upstream transport device (17, 18) and/or the downstream arranged cutting table (30) are displaceable relative to each other.

13. Apparatus according to claim 12, **characterized in that** each receiving compartment (22) may be positioned in a targeted manner relative to the transport device (17, 18).

14. Apparatus according to any one of claims 10 to 13, **characterized in that** the cutting table (30) is integrated into the intermediate storage unit (20).

15. Apparatus according to claim 14, **characterized in that** the intermediate storage unit (20) jointly with the cutting table (30) is displaceable relative to a downstream arranged transport line.

16. Apparatus according to any one of claims 10 to 15, **characterized in that** the intermediate storage unit (20) is motor-driven.

## Revendications

1. Procédé pour la découpe de plaques de verre (P) en pièces, dans lequel chaque plaque de verre (P) est rayée et ensuite rompue le long de ces rayures, conformément aux pièces découpées à produire, en utilisant des dispositifs de découpe et de rupture (30, 40, 50, 55, 60, 65, 75) ;
a) dans lequel on pratique des rayures dans chaque plaque de verre (P) et on la rompt suivant les coupes X pour en détacher des bandes de verre transversales (T) ;
b) dans lequel chaque bande de verre transversale (T) est rayée et rompue pour la découper davantage jusqu'à ce que les pièces désirées soient produites ; et
c) dans lequel les pièces découpées finies sont entreposées dans un tampon intermédiaire (80) ;
**caractérisé en ce que :**
d) au moins deux plaques de verre (P) avec des propriétés de matériel différentes sont acheminées d'un stock de plaques brutes (12) vers un stock intermédiaire (20) pour y être entreposées ;
e) les plaques de verre (P) sont prélevées du stock intermédiaire (20) et amenées vers la coupe X de manière à produire une séquence de bandes de verre transversales (T) dans laquelle les bandes de verre transversales (T) successives présentent des propriétés de matériel identiques ou différentes ;
f) une plaque résiduelle (R), produite en détachant une bande de verre transversale (T) de ladite au moins une plaque de verre (P), restant dans le stock intermédiaire (20) jusqu'au détachement d'une autre bande de verre transversale (T); et
g) les pièces découpées ainsi produites sont déposées dans le tampon intermédiaire (80) pour compléter des paires de vitres ou des groupes de vitres selon une affectation prédéterminée et acheminées selon les besoins vers un processus séquentiel.

2. Procédé selon la revendication 1, **caractérisé en ce que** la séquence des propriétés de matériel des bandes de verre transversales (T) est programmable conformément à l'affectation dans le tampon intermédiaire (80) et/ou aux exigences dans un processus séquentiel, tel qu'une ligne de vitrages isolants (90).

3. Procédé selon la revendication 1 ou 2, **caractérisé en ce que** des pièces découpées finies sont prélevées du tampon intermédiaire (80) et acheminées vers un processus séquentiel.

4. Procédé selon la revendication 3, **caractérisé en ce que** les pièces découpées sont prélevées en paires ou en groupes.

5. Procédé selon l'une des revendications 1 à 4, **caractérisé en ce que** le tampon intermédiaire (20) est chargé continuellement de plaques de verre (P) du stock de plaques brutes (12) conformément à la séquence de bandes de verre transversales.

6. Procédé selon l'une des revendications 1 à 5, **caractérisé en ce qu'**on pratique d'autres coupes sur la bande de verre transversale (T), telles que les coupes Y, Z, et/ou W, en utilisant la coupe X comme ligne de référence pour pratiquer les autres coupes.

7. Procédé selon l'une des revendications 1 à 6, **caractérisé en ce qu'**on sépare l'exécution des coupes X (coupes transversales) de l'exécution des autres coupes en termes d'espace et de temps.

8. Procédé selon l'une des revendications 1 à 7, **caractérisé en ce que** le tampon intermédiaire (80) est une séquence de pupitres en A, pupitres en L ou chariots à compartiments.

9. Procédé selon l'une des revendications 1 à 8, **caractérisé en ce qu'**on insère des pièces découpées externes, des vitres, des vitres façonnées, et d'autres choses semblables dans le tampon intermédiaire (80).

10. Appareil (10) pour la découpe de plaques de verre (P) en pièces, comportant un stock de plaques brutes (12), au moins un dispositif de découpe et de rupture (30, 40, 50, 55, 60, 75) et un tampon intermédiaire (80) afin d'entreposer les pièces découpées finies pour un processus séquentiel, **caractérisé en ce que :**
a) au moins un stock intermédiaire (20) est disposé en amont des dispositifs de découpe et de rupture (30, 40, 50, 55, 60, 75) pour recueillir au moins deux plaques de verre (P) du stock de plaques brutes présentant des propriétés de matériel différentes ;
b) le stock intermédiaire (20) comporte au moins deux compartiments (22) disposés parallèlement l'un par rapport à l'autre pour recueillir les plaques de verre (P), un dispositif de transport pour les plaques de verre (P) étant intégré dans chaque compartiment (22) ;
c) directement en aval du stock intermédiaire (20), une table de découpe (30) est prévue qui est équipée d'un dispositif combiné de découpe et de rupture (32) pour détacher les différentes bandes de verre transversales (T) des plaques de verre (P) entreposées dans le stock intermédiaire (20) ;
d) chaque compartiment (22) étant programmable de manière ciblée par rapport à la table de découpe (30) au moyen d'une commande par logiciel ; et
e) chaque plaque de verre (P) étant adaptée pour être sortie de son compartiment (22) et acheminée vers le dispositif combiné de découpe et de rupture (32) au moyen du dispositif de transport et conformément à l'ordre d'usinage prévu par la commande par logiciel de manière que le stock intermédiaire (20) fait sortir une séquence programmable de bandes de verre transversales (T) dans laquelle les bandes de verre transversales (T) successives présentant des propriétés de matériel identiques ou différentes.

11. Appareil selon la revendication 10, **caractérisé en ce que** chaque compartiment (22) est adapté pour recueillir une plaque de verre (P) individuelle.

12. Appareil selon la revendication 10 ou 11, **caractérisé en ce que** le stock intermédiaire (20), au moins un dispositif de transport (17, 18) disposé en amont et/ou la table de découpe (30) disposée en aval sont adaptés pour être déplacés l'un par rapport à l'autre.

13. Appareil selon la revendication 12, **caractérisé en ce que** chaque compartiment (22) est adapté pour être positionné de manière ciblée par rapport au dispositif de transport (17, 18).

14. Appareil selon l'une des revendications 10 à 13, **caractérisé en ce que** la table de découpe (30) est intégrée dans le stock intermédiaire (20).

15. Appareil selon la revendication 14, **caractérisé en ce que** le stock intermédiaire (20) est adapté pour être déplacé, conjointement avec la table de découpe (30), par rapport à une ligne de transport disposée en aval.

16. Appareil selon l'une des revendications 10 à 15, **caractérise en ce que** le stock intermédiaire (20) est entraîné par moteur.
